(19) Europäisches Patentamt
European Patent Office
Office européen des brevets

(11) EP 3 779 352 A1

(12) EUROPÄISCHE PATENTANMELDUNG

(43) Veröffentlichungstag:
17.02.2021  Patentblatt 2021/07

(51) Int Cl.:
$G01B\ 11/06^{(2006.01)}$  $G01B\ 11/25^{(2006.01)}$
$G01N\ 21/958^{(2006.01)}$

(21) Anmeldenummer: 19192074.3

(22) Anmeldetag: 16.08.2019

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Universität Stuttgart
70174 Stuttgart (DE)

(72) Erfinder:
• Foltyn, Patrick
70599 Stuttgart (DE)
• Roth, Norbert
70569 Stuttgart (DE)
• Weigand, Bernhard
70569 Stuttgart (DE)

(74) Vertreter: Gagel, Roland
Patentanwaltskanzlei
Dr. Roland Gagel
Landsberger Strasse 480 a
81241 München (DE)

(54) **VERFAHREN ZUR MESSUNG DER SCHICHTDICKE EINER OPTISCH TRANSPARENTEN SCHICHT, INSBESONDERE EINER FLÜSSIGKEITSSCHICHT**

(57) Bei einem Verfahren zur Messung der Schichtdicke einer optisch transparenten Schicht, insbesondere einer Flüssigkeitsschicht, wird ein optischer Strahl durch ein optisch transparentes Koppelelement (3, 5) hindurch so in die Schicht (4) eingekoppelt, dass er an einer Oberfläche der Schicht (4) durch Totalreflexion reflektiert wird. Der optische Strahl wird nach der Reflexion an der Oberfläche durch das optisch transparente Koppelelement (3, 5) hindurch auf einen ortsauflösenden optischen Detektor (8) gerichtet, um eine Position des optischen Strahls auf dem Detektor (8) zu erfassen. Aus einem Versatz dieser Position gegenüber einer Referenzposition auf dem optischen Detektor (8) wird dann die Schichtdicke der Schicht (4) bestimmt. Die Referenzposition entspricht dabei einer Position, auf die der optische Strahl bei interner Reflexion an der Oberfläche des Koppelementes (3, 5) trifft, die bei der Messung der Schichtdicke in Kontakt mit der Schicht (4) ist. Das vorgeschlagene Verfahren lässt sich kostengünstig durchführen und ermöglicht auch die Vermessung von Schichten unterhalb von 100 $\mu$m mit hoher Genauigkeit.

Fig. 1

EP 3 779 352 A1

Printed by Jouve, 75001 PARIS (FR)

**Beschreibung**

**Technisches Anwendungsgebiet**

Die vorliegende Erfindung betrifft ein Verfahren zur Messung der Schichtdicke einer optisch transparenten Schicht, insbesondere einer Flüssigkeitsschicht, mittels optischer Strahlung.

In vielen technischen Bereichen, beispielsweise in der Beschichtungstechnik, ist eine schnelle Messung der Schichtdicke im Bereich von 2 Mikrometern bis zu mehreren Millimetern zur Sicherung von Qualitätsstandards und zur Kostenersparnis notwendig. Weiterhin kann es beispielsweise erforderlich sein, dünne Schmierfilmdicken zu messen und zeitaufgelöst zu überwachen.

**Stand der Technik**

Für die Messung der Schichtdicke, insbesondere von Flüssigkeitsfilmen, sind akustische, elektrische und optische Methoden bekannt. Eine für die Messung der Schichtdicke einer optisch transparenten Schicht bekannte optische Methode stellt die konfokalchromatische Interferometrie (CCI) dar. Dabei wird polychromatisches Licht durch eine nicht farbkorrigierte Optik auf die Schicht fokussiert. Aufgrund der Dispersion liegt die Lage des Fokus für jede Wellenlänge dabei in einem anderen Abstand vom Messkopf. Mittels einer Kalibrierung kann jeder Wellenlänge ein bestimmter Abstandspunkt zugeordnet werden. Das von der Schicht reflektierte Licht wird über eine optische Anordnung auf ein lichtempfindliches Sensorelement abgebildet, auf dem die zugehörige Wellenlänge erkannt und ausgewertet wird. Der Einsatz dieser Technik ist jedoch mit relativ hohen Kosten verbunden, da aufwändige Messtechnik, insbesondere in Form eines Spektrometers, erforderlich ist. Die Messköpfe sind oft nur für einen sehr beschränkten Schichtdickenbereich einsetzbar, so dass bei stark variierenden Schichtdicken mehrere teure Messköpfe mit unterschiedlichen Messbereichen vorhanden sein müssen. Geringe Schichtdicken in Bereichen unterhalb von $100\,\mu m$ lassen sich mit dieser Technik bisher häufig nur über zusätzliche Maßnahmen oder unter sehr günstigen Messbedingungen zuverlässig vermessen. Die Schichtdicke kann jeweils nur von oben gemessen werden. Dabei ist jedoch oft der Messkopf im Weg, z.B. wenn Flüssigkeiten aufgesprüht werden. Des Weiteren erfordert diese Messtechnik einen ausreichend großen Brechungsindexunterschied zwischen dem zu messenden und dem darunterliegenden Medium. Sollte dieser Unterschied unzureichend sein, so ist die an der Grenzschicht reflektierte Intensität zu gering für eine Schichtdickenmessung.

Aus einem anderen technischen Bereich sind optische Sensoren zur Detektion von Feuchtigkeit, insbesondere von Regen, auf einer Oberfläche bekannt. Ein Beispiel sind Regensensoren im Automobilbereich, die das Einschalten der Scheibenwischanlage und die Geschwindigkeit der Wischerblätter regeln. Bei diesen Sensoren wird ein Lichtstrahl über ein Prisma so in die Windschutzscheibe eingekoppelt, dass er bei trockener Scheibe an der inneren Oberfläche der Scheibe total reflektiert wird. Die Intensität des reflektierten Strahls wird mit einer Empfangsdiode gemessen. Bei feuchter Scheibe wird ein Teil der Lichtintensität nach außen gebrochen, so dass auf der Empfangsdiode eine geringere Lichtintensität ankommt. Diese Intensitätsänderung wird zur Detektion von Regen auf der Windschutzscheibe herangezogen. Eine Beschreibung dieser Technik findet sich beispielsweise in K. Bammel, "Klare Sicht bei Sauwetter" Physik Journal 6 (2007), Nr. 3, Seiten 64 und 65). Eine Messung der Dicke des Flüssigkeitsfilms erfolgt mit dieser Technik nicht.

Die Aufgabe der vorliegenden Erfindung besteht darin, ein Verfahren zur Messung der Schichtdicke einer optisch transparenten Schicht, insbesondere eines Flüssigkeitsfilms, anzugeben, das sich kostengünstig realisieren lässt, über einen großen Schichtdickenbereich anwendbar ist und auch eine zuverlässige Messung von Schichtdicken unterhalb von $100\,\mu m$ ermöglicht.

**Darstellung der Erfindung**

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen.

Bei dem vorgeschlagenen Verfahren wird ein optischer Strahl durch ein optisch transparentes Koppelelement hindurch so in die Schicht eingekoppelt, dass er an der Oberfläche der Schicht durch interne Totalreflexion reflektiert wird. Der optische Strahl wird nach der Reflexion an der Oberfläche der Schicht durch das optisch transparente Koppelelement hindurch auf einen ortsauflösenden optischen Detektor gerichtet, um die Auftreffposition des optischen Strahls auf dem Detektor zu erfassen, im Folgenden auch als Reflexionsposition bezeichnet. Aus dem Versatz dieser Reflexionsposition gegenüber einer Referenzposition auf dem optischen Detektor wird dann die Schichtdicke bestimmt. Die Referenzposition entspricht dabei einer Position, auf die der optische Strahl bei interner Reflexion an der Oberfläche des Koppelelementes trifft, die bei der Messung der Schichtdicke in Kontakt mit der Schicht ist. Diese Oberfläche wird im Folgenden auch als Referenzoberfläche bezeichnet. In einer bevorzugten Ausgestaltung wird hierbei der optische Strahl unter einem Winkel in das optisch transparente Koppelelement eingestrahlt, unter dem der optische Strahl an der Referenzoberfläche intern totalreflektiert wird, solange keine Schicht auf dieser Oberfläche vorhanden ist. Die Referenzposition kann daher gemessen werden, bevor eine Schicht auf diese Oberfläche aufgebracht oder mit dieser Oberfläche in Kontakt gebracht wird. Eine derartige Referenzmessung wird daher vorzugsweise vorab durchgeführt.

Mit dem vorgeschlagenen Verfahren wird eine genaue Messung der Schichtdicke auch bei Schichten ermöglicht, die eine Schichtdicke von unter 100 μm aufweisen, sogar bis Schichtdicken, die nur einige μm dick sind. Das Verfahren ermöglicht mit der gleichen Messanordnung Schichtdickenmessungen über einen großen Schichtdickenbereich, z.B. bis hin zu Millimetern, und ist weitgehend unabhängig vom Brechungsindexunterschied zwischen den beteiligten Materialien, d.h. dem Material des Koppelelements und dem Schichtmaterial, da aufgrund der Totalreflexion im Gegensatz zu der auf einfacher Reflexion basierenden Methode der konfokalchromatischen Interferometrie (CCI) immer ausreichend große Lichtintensitäten am Detektor ankommen. Die Messanordnung lässt sich sehr kompakt und kostengünstig realisieren, da lediglich eine geeignete Lichtquelle, das Koppelelement und ein ortsauflösender Detektor erforderlich sind, der keine spektrale Auflösung aufweisen muss. Die Messung erfolgt von der Unterseite der Schicht und bietet daher gerade bei der Überwachung eines Schichtauftrags oder dem Abtrag einer Schicht, beispielsweise bei aufgesprühten Flüssigkeiten oder verdunstenden Filmen, Vorteile gegenüber dem bekannten CCI-Verfahren, da keinerlei Messkopf über der Schicht den Schichtauftrag stört.

Je nach Anwendung kann als optisch transparentes Koppelelement eine optisch transparente Platte oder Scheibe oder auch ein Umlenkprisma eingesetzt werden. Bei Nutzung eines Umlenkprismas als optisch transparentes Koppelelement wird vorzugsweise ein im Querschnitt gleichschenkliges, rechtwinkliges Umlenkprisma verwendet, auf dessen Basisfläche als Referenzoberfläche die zu vermessende Schicht aufgebracht oder dessen Basisfläche - bei einer selbsttragenden Schicht aus einem Festkörpermaterial, beispielsweise einer Polymerfolie - in Kontakt mit dieser Schicht gebracht wird.

Bei Nutzung einer Platte bzw. Scheibe als optisch transparentes Koppelelement wird vorzugsweise ebenfalls zusätzlich ein derartiges Umlenkprisma eingesetzt, um den optischen Strahl über das optisch transparente Koppelelement in die zu vermessende Schicht einzukoppeln. Die zu vermessende Schicht ist dabei auf die Platte bzw. Scheibe aufgebracht oder in Kontakt mit dieser. Die Basisfläche des Umkehrprismas wird vorzugsweise über ein geeignetes Koppelmedium an die Unter- bzw. Rückseite dieser Platte bzw. Scheibe angelegt, um eine Totalreflexion an der Basisfläche zu verhindern.

Zur Erzeugung des optischen Strahls wird eine Lichtquelle eingesetzt, die beispielsweise durch eine Halogenlampe, eine oder mehrere LEDs oder auch durch einen Laser, insbesondere einen Halbleiterlaser, gebildet sein kann. Vorzugsweise wird der optische Strahl hierbei kollimiert oder in Richtung des Detektors fokussiert. Durch geeignete Strahlformung kann ein beliebiges optisches Muster auf dem Detektor erzeugt werden. In einer sehr vorteilhaften Ausgestaltung stellt dieses Muster eine Linie dar, die senkrecht zur Einfallsebene des optischen Strahls auf die zu vermessende Schicht verläuft. Auf diese Weise kann mit nur einer Messung ein größerer Bereich der Schicht in der Dicke vermessen werden, wobei dann der jeweilige Versatz zur Referenzposition (in diesem Fall eine Referenzlinie) an mehreren Punkten der Linie bestimmt wird. Anstelle einer Linie kann auch ein entlang einer Linie verlaufendes Punktraster in dieser Weise genutzt werden. Auch ein flächiges Muster, beispielsweise in Form eines zweidimensionalen Punktrasters, kann für eine Vermessung eines größeren Schichtbereiches von Vorteil sein.

Als ortsauflösender optischer Detektor kann ein CCD- oder CMOS-Sensor-Array, beispielsweise in Form einer Kamera, eingesetzt werden. Besonders vorteilhaft lässt sich ein so genannter PSD-Sensor (Position Sensitive Detector) für das vorgeschlagene Verfahren einsetzen. Ein eindimensionaler PSD-Sensor ist für viele Anwendungen ausreichend. Es kann bei Bedarf jedoch auch ein zweidimensionaler PSD-Sensor genutzt werden.

Die Bestimmung der Schichtdicke aus dem Versatz der Reflexionsposition zur Referenzposition kann durch eine Berechnung erfolgen, falls die Brechungsindizes der beteiligten Materialien, d.h. des Materials des optisch transparenten Koppelelements sowie der zu vermessenden Schicht, und der Einfallswinkel des optischen Strahls auf das Koppelelement bekannt sind. Die Berechnung erfolgt dann mit Hilfe des Snelliusschen Brechungsgesetzes und trigonometrischen Zusammenhängen. Eine weitere Möglichkeit der Bestimmung der Schichtdicke besteht darin, vorab Kalibrierungsmessungen mit verschiedenen Dicken von Schichten aus dem gleichen Schichtmaterial durchzuführen, um Kalibrierdaten zu erhalten. Dann kann die Bestimmung einfach durch Vergleich mit diesen Kalibrierdaten erfolgen.

Das vorgeschlagene Verfahren lässt sich auch sehr vorteilhaft für einen Regensensor, beispielsweise im Automobilbereich, einsetzen. Das optisch transparente Koppelelement stellt dabei die Windschutzscheibe dar. Sobald eine bestimmte Schichtdicke gemessen wurde, wird dann die Scheibenwischanlage in Betrieb gesetzt. Die Geschwindigkeit kann über die gemessene Dicke des Flüssigkeitsfilms reguliert werden. Anstelle der Windschutzscheibe kann zur Regendetektion in anderen Anwendungen auch bspw. direkt das bereits beschriebene Umlenkprisma als Koppelelement eingesetzt werden, auf dessen Referenzoberfläche dann der Regen detektiert wird.

Das vorgeschlagene Verfahren lässt sich zur Bestimmung der Schichtdicke optisch transparenter Flüssigkeits- oder Festkörperschichten in vielen technischen Bereichen, insbesondere zur Überwachung des Schichtauftrags oder der Schichtdicke in der Produktion, einsetzen. Die zu vermessende Schicht muss dabei lediglich auf die Referenzoberfläche des optisch transparenten Koppelelements aufgebracht oder mit dieser Oberfläche in Kontakt gebracht werden.

**Kurze Beschreibung der Zeichnungen**

Das vorgeschlagene Verfahren wird nachfolgend anhand von Ausführungsbeispielen in Verbindung mit den Zeichnungen nochmals näher erläutert. Hierbei zeigen:

Fig. 1    eine Darstellung des Messprinzips des vorgeschlagenen Verfahrens anhand einer ersten beispielhaften Ausgestaltung;

Fig. 2    eine Darstellung des Messprinzips des vorgeschlagenen Verfahrens anhand einer zweiten beispielhaften Ausgestaltung;

Fig. 3    ein Beispiel für eine Messanordnung zur Durchführung des vorgeschlagenen Verfahrens im Vergleich zu einer Messanordnung gemäß einem Verfahren des Standes der Technik; und

Fig. 4    ein Beispiel für die Reflexionsposition und die Referenzposition auf dem ortsauflösenden Detektor bei Nutzung einer Laserlinie.

**Wege zur Ausführung der Erfindung**

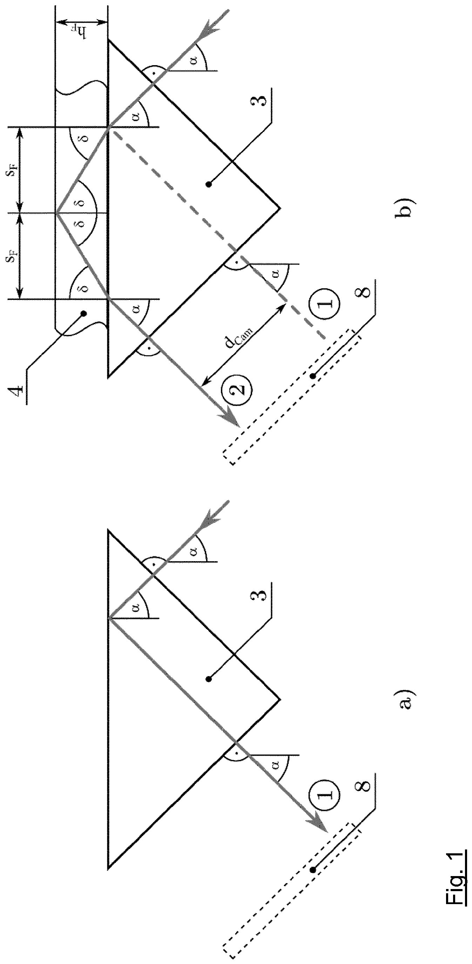

Bei dem vorgeschlagenen Verfahren wird die interne Totalreflexion an der Oberseite eines zu messenden Flüssigkeitsfilms oder einer zu messenden Festkörperschicht ausgenutzt. Im folgenden Beispiel wird als optisch transparentes Koppelelement ein im Querschnitt gleichschenkliges, rechtwinkliges Umlenkprisma 3 aus Glas eingesetzt, wie dies schematisch im Querschnitt in Fig. 1a dargestellt ist. Ein mittels einer LED oder einer Laserdiode erzeugter Lichtstrahl 1 wird hierbei unter einem senkrechten Winkel durch eine der Seitenflächen des Prismas 3 auf die Basisfläche gerichtet, an dieser Fläche totalreflektiert und verlässt anschließend das Prisma wieder über die andere Seitenfläche. Diese Totalreflexion an der Basisfläche tritt auf, wenn keine Schicht auf dieser Fläche aufgebracht ist. Der reflektierte optische Strahl, hier als Referenzstrahl 1 bezeichnet, wird dann mit einem ortsauflösenden optischen Detektor 8 erfasst, um dessen Auftreffposition auf dem Detektor 8 zu bestimmen. Durch diese Referenzmessung, bei der die Auftreffposition des Referenzstrahls 1 auf dem ortsauflösenden Detektor 8 bestimmt wird, wird die Referenzposition für die Messung der Schichtdicke festgelegt. Anschließend wird das Prisma 3 mit der Basisfläche (als Referenzfläche) parallel zur Oberseite der zu vermessenden Schicht in Kontakt mit dieser Schicht 4 gebracht, beispielsweise durch Aufbringen einer Flüssigkeitsschicht als zu vermessende Schicht auf die Basisfläche. Durch diesen Kontakt wird der optische Strahl an der Basisfläche nun nicht mehr intern totalreflektiert sondern in die zu vermessende Schicht 4 gebrochen und an der Oberseite dieser Schicht intern totalreflektiert, wie dies in Fig. 1b schematisch angedeutet ist. Der nun an der Schichtoberfläche reflektierte optische Strahl, im Folgenden auch als Messstrahl 2 bezeichnet, trifft dann an einer anderen Stelle (Reflexionsposition) auf den optischen Detektor 8 auf. Der Versatz $d_{Cam}$ der Reflexionsposition zur Referenzposition ist proportional zur Schichtdicke $h_F$ der aufgebrachten Schicht 4. Als ortsauflösender optischer Detektor 8 kann beispielsweise ein CCD-Sensor, ein CMOS-Sensor oder ein PSD eingesetzt werden. Auch eine Vergrößerungsoptik kann vor dem Detektor 8 zum Einsatz kommen, um den Versatz noch genauer bestimmen zu können.

Im vorliegenden Beispiel ohne zusätzliche Vergrößerungsoptik kann die Dicke $h_F$ der Schicht 4 aus der folgenden Formel unter Nutzung des Snelliusschen Brechungsgesetzes und von trigonometrischen Zusammenhängen direkt berechnet werden:

$$h_F = \frac{1}{2}d_{Cam}\,\frac{n_F}{n_P}\,\frac{1}{sin(\alpha)cos(\alpha)}\sqrt{1-\left(\frac{n_P}{n_F}\right)^2 sin^2(\alpha)}$$

Die gemessene Schichtdicke $h_F$ hängt dabei primär von der Verschiebung bzw. dem Versatz $d_{Cam}$ der Reflexionsposition auf dem Detektor 8 von der Referenzposition ab, sowie dem Brechungsindex $n_F$ der Schicht 4, dem Brechungsindex $n_P$ des Prismas 3 und dem Winkel $\alpha$, unter dem der optische Strahl auf die Schicht 4 trifft. Da in diesem Beispiel ein rechtwinkliges Prisma 3 eingesetzt wurde, beträgt $\alpha = 45°$.

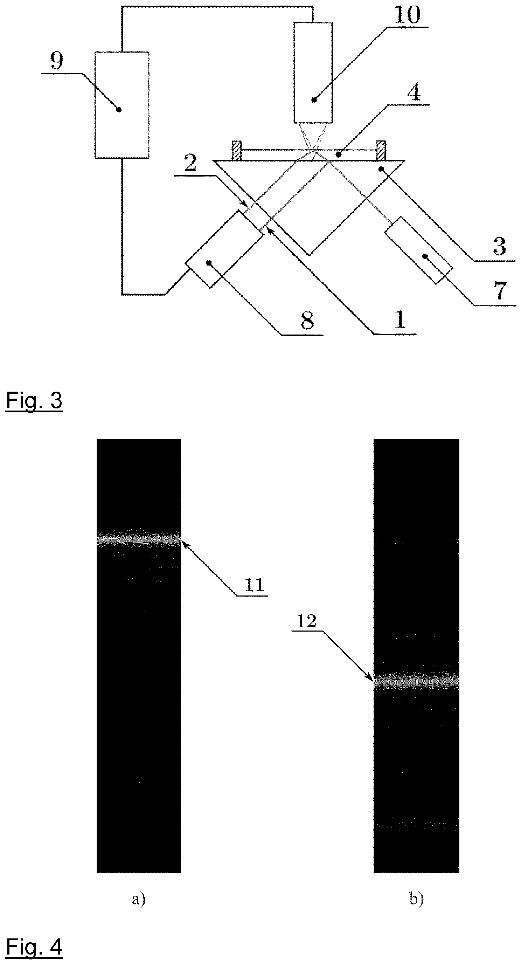

Figur 4 zeigt hierbei ein Beispiel für ein mit dem Detektor 8 aufgenommenes Bild des Referenzstrahls (Fig. 4a) und für ein mit dem Detektor 8 aufgenommenes Bild des Messstrahls (Fig. 4b). In diesem Beispiel wurde als Lichtquelle ein Laser eingesetzt, dessen Laserstrahl zu einer senkrecht zur Einfallsebene auf die zu vermessende Schicht verlaufenden Laserlinie geformt wurde. In der Figur 4a ist hierbei die Laserlinie 11 des Referenzstrahls auf der sensitiven Fläche des ortsauflösenden Detektors ohne Schicht auf dem Prisma (Referenzmessung) zu erkennen. Die Position dieser Laserlinie 11 entspricht der Referenzposition. In der Figur 4b ist die Laserlinie 12 des Messstrahls auf der sensitiven Fläche des ortsauflösenden Detektors bei einer auf dem Prisma aufgebrachten Schicht mit einer Schichtdicke von etwa 300 μm dargestellt. Die Position dieser Laserlinie 12 entspricht der Reflexionsposition.

Die Verschiebung bzw. der Versatz der Position der Laserlinie 12 auf der Detektionsfläche gegenüber der Referenzposition ist deutlich zu erkennen. Beide Bilder sind unbearbeitet. Die Reflexion des Laserstrahls an der Grenzfläche des Prismas 3 zur Schicht 4 ist so gering, dass diese Reflexion in Fig. 4b nicht zu erkennen ist.

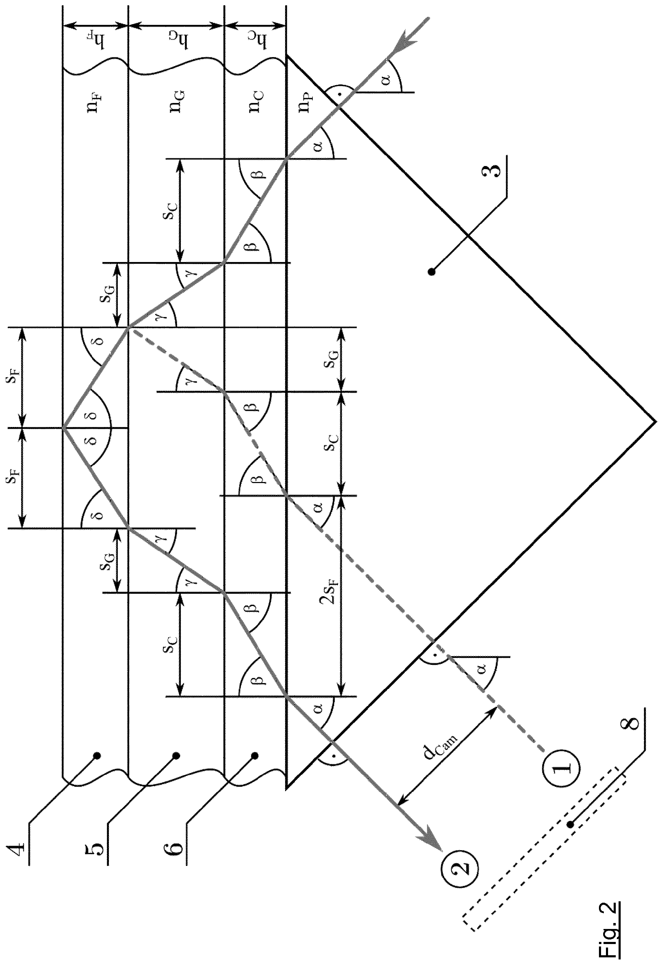

Fig. 2 zeigt ein weiteres Beispiel einer möglichen Ausgestaltung des vorgeschlagenen Verfahrens, bei dem als optisch transparentes Koppelelement eine Glasplatte 5 zum Einsatz kommt. Die zu vermessende Schicht 4 ist wiederum auf der Oberseite dieser Glasplatte 5 aufgebracht. Im vorliegenden Beispiel wird ebenfalls ein im Querschnitt rechtwinkliges, gleichschenkliges Umlenkprisma 3 eingesetzt, um diesmal den optischen Strahl über die Glasplatte 5 in die zu vermessende Schicht 4 einzukoppeln. Die Strahlengänge von Messstrahl 2 und Referenzstrahl 1 sind in dieser Figur wiederum angedeutet. Die Referenzposition wird durch eine Referenzmessung vor dem Aufbringen der Schicht 4 auf die Glasplatte 5 durchgeführt. Um den Luftspalt zwischen dem Prisma 3 und der Glasplatte 5 zu schließen, wird in diesem Beispiel ein Kopplungsmedium 6 zwischen der Basisfläche des Prismas 3 und der Unterseite der Glasplatte 5 verwendet. Die Kopplungsspaltdicke $h_C$ ist hierbei irrelevant für die Messung der Schichtdicke der Schicht 4, da der optische Strahl sowohl beim Eintritt als auch beim Austritt durch diese zusätzliche Kopplungsschicht lediglich parallel verschoben wird (vgl. Fig. 2).

Die Auflösung des vorgeschlagenen Verfahrens kann durch eine optische Vergrößerung, durch eine Minimierung der Pixelgröße des optischen Detektors 8 (bei Nutzung eines CCD- oder CMOS-Sensors) und/oder eine Minimierung des Strahlquerschnitts des optischen Strahls bzw. - im Falle einer Linie - der Liniendicke gesteigert werden. Hierbei können diese drei Größen sehr variabel eingesetzt werden, um ein deutlich größeres Spektrum an Schichtdicken zu messen als herkömmliche Messanordnungen des Standes der Technik.

Figur 3 zeigt schließlich noch schematisch ein Beispiel für den Messaufbau bei dem vorgeschlagenen Verfahren im Vergleich zum Messaufbau bei Nutzung der konfokalen chromatischen Interferometrie (CCI). In der Figur 3 sind wiederum das Umlenkprisma 3 sowie die an der Basisfläche aufgebrachte zu vermessende Schicht 4 zu erkennen. Beim vorgeschlagenen Messaufbau wird eine optische Lichtquelle 7 eingesetzt, um die Schicht 4 über das Prisma 3 von unten zu beleuchten und an der Schichtoberfläche intern reflektierte Strahlung mit einem ortsauflösenden optischen Detektor 8, im vorliegenden Beispiel eine Kamera, zu detektieren. Die Auswertung erfolgt dann über eine geeignete Auswerteeinrichtung 9, insbesondere einen Computer. Im Vergleich dazu wird für die CCI ein Messkopf 10 benötigt, der die Schicht 4 von oben beleuchtet, wie dies in der Figur 3 angedeutet ist. Die Auswertung erfolgt auch hier über eine geeignete Auswerteeinheit 9. Ein derartiger Messkopf 10 stört aber vor allem bei Anwendungen, bei denen das Aufbringen der Schicht 4 überwacht werden soll.

Bezugszeichenliste

1    Referenzstrahl
2    Messstrahl
3    Umlenkprisma
4    Schicht
5    Glasplatte
6    Kopplungsmedium
7    optische Lichtquelle
8    ortsauflösender optischer Detektor
9    Auswerteeinheit
10   CCI-Messkopf
11   Laserlinie des Referenzstrahls
12   Laserlinie des Messstrahls

**Patentansprüche**

1.  Verfahren zur Messung der Schichtdicke einer optisch transparenten Schicht, insbesondere einer Flüssigkeitsschicht, bei dem

    - ein optischer Strahl durch ein optisch transparentes Koppelelement (3, 5) hindurch so in die Schicht (4) eingekoppelt wird, dass er an einer Oberfläche der Schicht (4) durch Totalreflexion intern reflektiert wird,
    - der optische Strahl nach der Reflexion an der Oberfläche der Schicht (4) durch das optisch transparente Koppelelement (3, 5) hindurch auf einen ortsauflösenden optischen Detektor (8) gerichtet wird, um eine Position des optischen Strahls auf dem optischen Detektor (8) zu erfassen, und
    - aus einem Versatz der erfassten Position gegenüber einer Referenzposition auf dem optischen Detektor (8) die Schichtdicke der Schicht (4) bestimmt wird, wobei die Referenzposition einer Position entspricht, auf die der optische Strahl bei Reflexion an einer Oberfläche des Koppelelementes (3, 5) als Referenzoberfläche trifft, die bei der Messung der Schichtdicke in Kontakt mit der Schicht (4) ist.

2.  Verfahren nach Anspruch 1,
    **dadurch gekennzeichnet,**
    **dass** der optische Strahl unter einem Winkel in das optisch transparente Koppelelement (3, 5) eingestrahlt wird, unter dem der optische Strahl an der Referenzoberfläche intern totalreflektiert wird, falls keine Schicht (4) an der Referenzoberfläche vorhanden ist.

3.  Verfahren nach Anspruch 1 oder 2,
    **dadurch gekennzeichnet,**
    **dass** als optisch transparentes Koppelelement (3, 5) ein Umlenkprisma eingesetzt wird.

4.  Verfahren nach Anspruch 1 oder 2,
    **dadurch gekennzeichnet,**
    **dass** als optisch transparente Koppelelement (3, 5) eine Platte oder Scheibe eingesetzt wird.

5.  Verfahren nach Anspruch 4,
    **dadurch gekennzeichnet,**
    **dass** der optische Strahl über ein Umlenkprisma durch das optisch transparente Koppelelement (3, 5) hindurch in die Schicht (4) eingekoppelt wird, wobei das Umlenkprisma direkt oder mit einem Koppelmedium (6) an das optisch transparente Koppelelement (3, 5) angesetzt wird.

6. Verfahren einem der Ansprüche 1 bis 5,
**dadurch gekennzeichnet,**
**dass** der optische Strahl mit einer Lichtquelle erzeugt wird.

7. Verfahren nach einem der Ansprüche 1 bis 6,
**dadurch gekennzeichnet,**
**dass** der optische Strahl als Lichtlinie geformt wird.

8. Verfahren nach einem der Ansprüche 1 bis 7,
**dadurch gekennzeichnet,**
**dass** als ortsauflösender optischer Detektor (8) eine Kamera eingesetzt wird.

9. Verfahren nach einem der Ansprüche 1 bis 7,
**dadurch gekennzeichnet,**
**dass** als ortsauflösender optischer Detektor (8) ein ein- oder zweidimensionaler PSD eingesetzt wird.

10. Verfahren nach einem der Ansprüche 1 bis 9,
**dadurch gekennzeichnet,**
**dass** die Schichtdicke der Schicht (4) bei Kenntnis der Brechungsindizes von Koppelelement- und Schichtmaterial aus dem Versatz berechnet wird.

11. Verfahren nach einem der Ansprüche 1 bis 9,
**dadurch gekennzeichnet,**
**dass** die Schichtdicke der Schicht (4) aus einem Vergleich mit Kalibrierdaten bestimmt wird, die durch Vorabmessungen erhalten wurden.

a)

b)

Fig. 1

EP 3 779 352 A1

Fig. 2

Fig. 3

a)                                    b)

Fig. 4

**Europäisches Patentamt**
**European Patent Office**
**Office européen des brevets**

# EUROPÄISCHER RECHERCHENBERICHT

Nummer der Anmeldung

EP 19 19 2074

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DATABASE WPI<br>Week 198235<br>1982<br>Thomson Scientific, London, GB;<br>AN 1982-L6266E<br>XP002797783,<br>-& SU 879 293 A1 (MOSC AVIATION INST)<br>7. November 1981 (1981-11-07)<br>* Zusammenfassung *<br>----- | 1-11 | INV.<br>G01B11/06<br><br>ADD.<br>G01B11/25<br>G01N21/958 |
| X | DE 10 2005 050795 A1 (KOSTAL LEOPOLD GMBH<br>& CO KG [DE]) 26. April 2007 (2007-04-26)<br>* das ganze Dokument *<br>----- | 1-11 | |
| A | DATABASE WPI<br>Week 198040<br>1980<br>Thomson Scientific, London, GB;<br>AN 1980-J6584C<br>XP002797784,<br>-& SU 715 931 A1 (MOSC AVIATION INST)<br>25. Februar 1980 (1980-02-25)<br>* Zusammenfassung *<br>----- | 1-11 | |
| A | US 2003/025899 A1 (AMARA MOHAMED KAMEL<br>[US] ET AL) 6. Februar 2003 (2003-02-06)<br>* Zusammenfassung *<br>* Absätze [0016] - [0021] *<br>* Absätze [0046] - [0049]; Abbildung 4 *<br>----- | 1-11 | |

RECHERCHIERTE
SACHGEBIETE (IPC)

G01B
G01N
G01F

Der vorliegende Recherchenbericht wurde für alle Patentansprüche erstellt

| Recherchenort | Abschlußdatum der Recherche | Prüfer |
|---|---|---|
| München | 19. Februar 2020 | Burkart, Johannes |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

....................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 19 2074

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2020

| Im Recherchenbericht angeführtes Patentdokument | Datum der Veröffentlichung | Mitglied(er) der Patentfamilie | Datum der Veröffentlichung |
|---|---|---|---|
| SU 879293 A1 | 07-11-1981 | KEINE | |
| DE 102005050795 A1 | 26-04-2007 | KEINE | |
| SU 715931 A1 | 25-02-1980 | KEINE | |
| US 2003025899 A1 | 06-02-2003 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K. BAMMEL.** Klare Sicht bei Sauwetter. *Physik Journal,* 2007, vol. 6 (3), 64, , 65